# EUROPÄISCHE PATENTSCHRIFT

(11) **EP 4 028 153 B1**
(45) Veröffentlichungstag und Bekanntmachung des Hinweises auf die Patenterteilung: **08.11.2023**
(21) Anmeldenummer: 20774910.2
(22) Anmeldetag: 11.09.2020
(51) Int. Cl.: B01J 8/00, G01G 19/387

(54) **VERFAHREN ZUR BEFÜLLUNG VON REAKTOREN UND ZUR UNTERSUCHUNG VON KATALYSATOREN**
METHOD FOR FILLING REACTORS AND FOR EXAMINING CATALYTIC REACTORS
PROCÉDÉ DE REMPLISSAGE DE RÉACTEURS ET D'EXAMEN DE RÉACTEURS CATALYTIQUES

(30) Priorität: 13.09.2019 DE 102019214017
(43) Veröffentlichungstag der Anmeldung: 20.07.2022
(73) Patentinhaber: HTE GmbH The High Throughput Experimentation Company, 69123 Heidelberg (DE)
(72) Erfinder: SAUER, Tilman, 69123 Heidelberg (DE); HOEHN, Veit, 82377 Penzberg (DE); ROTH, Marcus, 68199 Mannheim (DE); RUPP, Benjamin, 69123 Heidelberg (DE); SCHRAPEL, Thomas, 68723 Plankstadt (DE); STRASSER, Andreas, 67056 Ludwigshafen (DE)
(74) Vertreter: BASF IP Association
(86) Internationale Anmeldenummer: PCT/EP2020/075497
(87) Internationale Veröffentlichungsnummer: WO 2021/048373

(56) Entgegenhaltungen:
- DE-A1-102004 023 249
- US-A1- 2009 308 138
- US-A1- 2011 131 930

## Beschreibung

### Gebiet der Erfindung

Die Erfindung betrifft ein Verfahren zur Assistenz und Dokumentation einer Befüllung von Rohrreaktoren mit einer Erfassung von Füllmaterialien und Füllständen von Füllmaterialien und der Dokumentation der verwendeten Füllmaterialien, Füllständen und Ergebnissen eines Katalyse-Prozesses vor derart hergestellten Rohrreaktoren, und ein Verfahren und eine Vorrichtung zur Untersuchung von Katalysatoren und die Verwendung einer relationalen Datenbank zur Erfassung und Auswertung von Daten bzw. Messdaten.

### Hintergrund der Erfindung

In der Hochdurchsatzforschung werden Reaktoren, insbesondere Rohrreaktoren auf ihre Wirksamkeit getestet. Rohrreaktoren weisen dabei eine Füllschüttung von zum Teil unterschiedlichen Materialien auf. Das Füllmaterial liegt oft in einer Pulverform vor. Jedoch ist ein Pulver von relativ undefinierter Dichte. Daher wird das pulverförmige Material nach dem Einbringen in den Rohrreaktor verdichtet. Dabei ist es wichtig, dass die Parameter definiert ermittelt werden, insbesondere wenn es sich bei der Füllschüttung um eine mehrschichtige Schüttung handelt. Dabei können die Füllmaterialien identifiziert, gewogen und deren Volumen ermittelt werden. Für eine effiziente und zuverlässige Bearbeitung von Testabläufen ist es notwendig reproduzierbare Testbedingungen bereitzustellen. Dabei ist es hilfreich dem Benutzer bei den Testabläufen zur Herstellung von Reaktoren zu assistieren und die Abläufe zu dokumentieren.

Die WO 2013/175240 beschreibt ein Verfahren zur Herstellung eines Produktes, das die vom Benutzer erwarteten Eigenschaften treffen oder übertreffen soll, wobei ein Algorithmus zur Optimierung des Verfahrens eingesetzt wird. Es handelt sich bei dem in WO 2013/175240 beschriebenen Verfahren um ein Flusssystem handelt, wobei das Analytik-System an das Flusssystem angepasst ist.

In US 7 118 917 B2 ist eine Vorrichtung beschrieben, in der eine Mehrzahl von parallel angeordneten Reaktoren mit individuellen Temperierungselementen separat beheizt und/oder gekühlt werden können.

In EP 1 796 897 B1 ist eine Vorrichtung und ein Verfahren zur kontrollierten Verdichtung von Partikelschüttungen in Rohrreaktoren beschrieben, die einer mechanischen Verdichtungsbehandlung unterzogen werden. US2011/131930 offenbart ein Verfahren zur Befüllung eines Reaktors mit katalytischen Teilchen.

Die vorliegende Erfindung stellt eine Vorrichtung und ein Verfahren zur Verfügung, dass Funktionstests und insbesondere die Funktionstests in Form von katalytischen Testuntersuchungen verbessert gegenüber den aus dem Stand der Technik bekannten Verfahren.

### Zusammenfassung der Erfindung

Der Gegenstand der vorliegenden Erfindung betrifft ein Verfahren und eine Vorrichtung zur Assistenz und Dokumentation einer Befüllung von Rohrreaktoren gemäß den unabhängigen Ansprüchen, weitere Ausführungsformen der Erfindung werden in den anhängigen Ansprüchen verkörpert.

Gemäß einer Ausführungsform der Erfindung wird ein Verfahren bereitgestellt zur Assistenz und Dokumentation einer Befüllung von Rohrreaktoren, umfassend: Erfassen einer Benutzerauswahl eines Befüllungsplans für eine Anordnung von Rohrreaktoren; Erfassen einer Menge eines ersten Füllmaterials, mit dem ein Rohrreaktor aus der Anordnung von Rohrreaktoren befüllt wurde; Erfassen einer Füllstandshöhe des ersten Füllmaterials, mit dem ein Rohrreaktor aus der Anordnung von Rohrreaktoren befüllt wurde; Erfassen einer Menge eines zweiten Füllmaterials, mit dem ein Rohrreaktor aus der Anordnung von Rohrreaktoren befüllt wurde; Erfassen einer Füllstandshöhe des zweiten Füllmaterials, mit dem ein Rohrreaktor aus der Anordnung von Rohrreaktoren befüllt wurde; Erfassen einer Füllstandshöhe einer gesamten Höhe von allen Füllmaterialien in dem jeweiligen Rohrreaktor; Zuweisen der erfassten Mengen von Füllmaterial und der erfassten Füllstandshöhen in einer Datenbasis; und Durchführen eines Katalyse-Prozesses an dem jeweiligen Rohrreaktor und Korrelieren eines Ergebnisses des Katalyse-Prozesses mit den erfassten Mengen von Füllmaterial und den erfassten Füllstandshöhen in der Datenbasis.

Auf diese Weise wird einem Benutzer bei der Herstellung eines oder mehrerer Rohrreaktoren assistiert und die Handlungen, seien es die des Benutzers oder die des Systems, dokumentiert. Diese Dokumentation kann als Grundlage für ein Assistieren eines späteren Herstellens dienen, etwa als Wissensdatenbasis.

Gemäß einer Ausführungsform der Erfindung erfolgt nach dem Erfassen einer Füllstandshöhe des zweiten Füllmaterials und vor dem Erfassen einer Füllstandshöhe einer gesamten Höhe eine vorgebbare Anzahl mal ein Erfassen einer Menge eines weiteren Füllmaterials, mit dem ein Rohrreaktor aus der Anordnung von Rohrreaktoren befüllt wurde, und ein Erfassen einer Füllstandshöhe des weiteren Füllmaterials, mit dem ein Rohrreaktor aus der Anordnung von Rohrreaktoren befüllt wurdet.

Auf diese Weise kann das Befüllungsmuster bei der Befüllung von mehreren Reaktoren verändert werden. Insbesondere kann beispielsweise in alle Reaktoren erst ein erstes Füllmaterial eingebracht, ggf. verdichtet werden und dessen Füllstandshöhe ermittelt werden, bevor eine Befüllung mit einem zweiten Füllmaterial erfolgt. Dies kann insbesondere dann relevant sein, wenn bei einem Wechsel des Füllmaterials eine Behandlung, beispielsweise Reinigung, der Befüllvorrichtung erfolgen muss.

Gemäß einer Ausführungsform der Erfindung erfolgt zwischen dem Erfassen einer Menge des jeweiligen Füllmaterials und dem Erfassen einer Füllstandshöhe des jeweiligen Füllmaterials ein Ansteuern eines Verdichtens des jeweiligen Füllmaterials.

Auf diese Weise kann eine definierte Dichte des eingeschütteten Füllmaterials gewährleistete werden, insbesondere bei pulverförmigen Füllmaterialien. Die Verdichtung kann mit einem Verdichtungsstempel erfolgen, der insbesondere eine Verdichtungsfläche hat, die eben ist und orthogonal zur Rohrreaktorlängserstreckung bzw. der inneren Seitenwand ist. Dadurch werden definierte Grenzflächen zwischen benachbarten Füllmaterialien hergestellt.

Gemäß einer Ausführungsform der Erfindung umfasst ein Erfassen einer Menge des jeweiligen Füllmaterials ein Erfassen einer Benutzerangabe der Menge des jeweiligen Füllmaterials oder ein Erfassen eines Messwertes einer Dosiervorrichtung zum Dosieren einer Menge des jeweiligen Füllmaterials.

Auf diese Weise können die maßgeblichen Daten sowohl durch einen Benutzer, als auch durch das System ermittelt werden und dem Verfahren als Information zugeführt werden.

Gemäß einer Ausführungsform der Erfindung umfasst ein Erfassen einer Füllstandshöhe ein Erfassen einer Benutzerangabe der Füllstandshöhe oder ein Erfassen eines Messwertes einer Füllstandshöhenmessvorrichtung zum Messen einer Füllstandshöhe.

Auf diese Weise können die maßgeblichen Daten sowohl durch einen Benutzer, als auch durch das System ermittelt werden und dem Verfahren als Information zugeführt werden.

Gemäß einer Ausführungsform der Erfindung umfasst ein Erfassen einer Benutzerauswahl eines Befüllungsplans für eine Anordnung von Rohrreaktoren ein Erfassen eines von einem Benutzer erstellten Befüllungsplans für eine Anordnung von Rohrreaktoren umfasst.

Auf diese Weise kann auch ein individualisierter oder vom Benutzer unmittelbar erstellter Befüllungsplan als Grundlage für das Verfahren dienen.

Gemäß einer Ausführungsform der Erfindung erfolgt nach einem Erfassen einer Füllstandshöhe eine Rückmeldung an den Benutzer, ob die erfasste Füllstandshöhe einer erwarteten Füllstandshöhe entspricht, auf der Grundlage der Menge von Füllmaterialien, einem Verdichtungskoeffizienten des bzw. der jeweiligen Füllmaterialien und einem Verdichtungsdruck.

Auf diese Weise kann ein Benutzer eine unmittelbare Rückmeldung über ein voraussichtliches Gelingen erhalten und ggf. Maßnahmen ergreifen, bevor die Rohrreaktoren fertiggestellt sind.

Gemäß einer Ausführungsform der Erfindung wird nach einem Erfassen einer Füllstandshöhe dieser Wert mit einer vorgebbaren Toleranz aus dem Befüllungsplan verglichen und bei einem Unterschreiten der Toleranz das zuvor befüllte Material nachdosiert, oder bei einem Überschreiten der Toleranz das zuvor befüllte Material entfernt, um in ein vorgebbares Toleranzfeld zu gelangen.

Auf diese Weise kann eine automatisierte Füllmengenanpassung erfolgen und eine genauere Herstellung von Rohrreaktoren erfolgen.

Gemäß einer Ausführungsform der Erfindung wird ein Verfahren für eine Assistenz und eine Dokumentation einer Befüllung von wenigstens einem ersten Rohrreaktor und einem zweiten Rohrreaktor bereitgestellt, bei dem vor dem Erfassen einer Menge eines zweiten Füllmaterials mit dem der erste Rohrreaktor aus der Anordnung von Rohrreaktoren befüllt wurde, ein Erfassen einer Menge eines ersten Füllmaterials, mit dem der erste Rohrreaktor aus der Anordnung von Rohrreaktoren befüllt wurde, ein Erfassen einer Füllstandshöhe des ersten Füllmaterials, mit dem der erste Rohrreaktor aus der Anordnung von Rohrreaktoren befüllt wurde, ein Erfassen einer Menge eines ersten Füllmaterials, mit dem der zweite Rohrreaktor aus der Anordnung von Rohrreaktoren befüllt wurde, sowie ein Erfassen einer Füllstandshöhe des ersten Füllmaterials, mit dem der zweite Rohrreaktor aus der Anordnung von Rohrreaktoren befüllt wurde, erfolgt.

Auf diese Weise kann ein Ablauf der Befüllung von Rohrreaktoren effizienter gestaltet werden, insbesondere, da ein erstes Füllmaterial zunächst in eine Vielzahl von Reaktoren eingebracht wird, bevor ein zweites Füllmaterial eingefüllt wird. Das erspart etwaige Reinigungsvorgänge und andere Handlungen, die zwischen einem Wechsel des Füllmaterials vorgenommen werden müssen.

Gemäß einer Ausführungsform der Erfindung umfasst das Verfahren ferner ein Positionieren eines Einlegeelementes in dem jeweiligen Rohrreaktor, wobei das Einlegelement ausgewählt ist aus einer Gruppe bestehend aus einem Katalysatorstuhl, einem porösen Formköper, einem Glaswollstopfen, einer Glaswollscheibe, keramischen Kugeln und einem Unterbau, wobei Füllmaterialien insbesondere in denjenigen Bereich der Rohrreaktoren eingefüllt werden, der im Zentrum der Rohrreaktoren liegt, wobei die Länge eines mit Füllmaterial zu befüllenden Rohrreaktorsegments insbesondere im Bereich von 5 bis 500 mm liegt, insbesondere im Bereich von 15 bis 350 mm.

Auf diese Weise können neben schüttfähigen und/oder pulverförmigen Füllmaterialien auch Festkörperelemente in den Reaktor eingebracht werden, die eine bestimmte Funktion im Reaktor erfüllen können, die ein pulverförmiges Füllmaterial eventuell nicht erfüllen kann.

Gemäß einer Ausführungsform der Erfindung umfasst das Verfahren eine visualisiertes Darstellen einer Markierung, in der eine untere und eine obere Zielposition eines Zielfensters dargestellt ist, welches senkrecht zur Längsachse des jeweiligen Rohrreaktors angeordnet ist, in der die erfasste Füllhöhe und eine gewünschte Füllhöhe angezeigt wird.

Auf diese Weise kann dem Benutzer direkt vor Augen geführt werden, wie der Füllzustand im Rohrreaktor ist, selbst wenn der Rohrreaktor nicht ohne Weiteres für den Benutzer in Augenschein genommen werden kann.

Gemäß einer Ausführungsform der Erfindung ist die Vorrichtung zur Assistenz und Dokumentation einer Befüllung von Rohrreaktoren ausgelegt ein Verfahren zur Assistenz und Dokumentation einer Befüllung von Rohrreaktoren gemäß obiger Beschreibung auszuführen, aufweisend: Benutzerauswahl-Erfassungsvorrichtung zum Erfassen einer Benutzerauswahl eines Befüllungsplans für eine Anordnung von Rohrreaktoren; Füllmaterialmengenerfassungsvorrichtung zum Erfassen einer Menge eines Füllmaterials, mit dem ein Rohrreaktor aus der Anordnung von Rohrreaktoren befüllt wurde; Füllstandshöhenerfassungsvorrichtung zum Erfassen einer Füllstandshöhe eines einzelnen Füllmaterials und einer gesamten Höhe von allen Füllmaterialien, mit dem bzw. denen ein Rohrreaktor aus der Anordnung von Rohrreaktoren befüllt wurde; Datenverarbeitungsvorrichtung zur Zuweisung der erfassten Mengen von Füllmaterial und der erfassten Füllstandshöhen in einer Datenbasis, wobei die Datenverarbeitungsvorrichtung ausgeführt ist ein Ergebnisses eines Katalyse-Prozesses mit den erfassten Mengen von Füllmaterial und den erfassten Füllstandshöhen in der Datenbasis zu korrelieren.

Auf diese Weise kann eine Vorrichtung bzw. ein System bereitgestellt werden, welches verfahrensmäßig arbeitet und dem Benutzer bei der Herstellung eines oder mehrerer Rohrreaktoren assistiert und die Handlungen dokumentiert.

Gemäß einer Ausführungsform der Erfindung weist die Vorrichtung eine Katalyse-Prozessvorrichtung auf, die ausgeführt ist, um an einem jeweiligen Rohrreaktor einen Katalyse-Prozess durchzuführen und Ergebnisse des Katalyse-Prozesses mit den erfassten Mengen von Füllmaterial und den erfassten Füllstandshöhen in der Datenbasis zu korrelieren.

Auf diese Weise kann auch direkt eine Katalyse vorgenommen werden, um die Eigenschaften der hergestellten Rohrreaktoren zu ermitteln, die als Grundlage für die Datenbasis dienen können.

Gemäß einer Ausführungsform der Erfindung weist die Vorrichtung ferner auf: eine Befüllvorrichtung mit einer Wiegevorrichtung zum Erfassen und Befüllen des jeweiligen Rohrreaktors mit einem Füllmaterial; eine mechanische Verdichtungsvorrichtung zur Verdichtung des eingefüllten Füllmaterials in dem jeweiligen Rohrreaktor; und eine Füllstandmessvorrichtung zur Erfassung einer Füllstandshöhe des jeweiligen Füllmaterials bzw. einer Gesamtheit der Füllmaterialien in dem jeweiligen Rohrreaktor, wobei die Verdichtungsvorrichtung und die Füllstandshöhenmessvorrichtung insbesondere dazu ausgelegt sind Rohrreaktoren zu befüllen, die eine Länge aufweisen, die im Bereich von 10 bis 250 cm liegt, insbesondere im Bereich von 15 bis 150 cm, insbesondere im Bereich von 20 - 100 cm, und einen Innendurchmesser aufweisen, der im Bereich von 4 bis 100 mm liegt, insbesondere im Bereich von 7 bis 60 mm, insbesondere im Bereich von 7 bis 40 mm.

Auf diese Weise kann nicht nur ein Assistieren und Dokumentieren erfolgen, sondern auch ein Handhaben der Herstellungsschritte selbst.

Gemäß einer Ausführungsform der Erfindung umfasst die Vorrichtung ferner eine Drucktestvorrichtung zur Überprüfung der Druckfestigkeit der Gesamtheit der verdichteten Füllmaterialien.

Auf diese Weise kann ein fertig hergestellter Rohrreaktor vermessen werden und überprüft werden, ob die fertig verpresste Säule von Füllmaterialien Eigenschaften aufweist, die konsistent sind zu den einzelnen Messchritten der einzelnen Füllmaterialien.

Gemäß einer Ausführungsform der Erfindung weist die Vorrichtung eine Positioniervorrichtung auf, die ausgelegt ist Einlegeelemente in den jeweilige Rohrreaktoren zu positionieren, wobei die Einlegelemente ausgewählt sind aus einer Gruppe bestehend aus einem Katalysatorstuhl, einem porösen Formköper, einem Glaswollstopfen, einer Glaswollscheibe und keramische Kugeln.

Auf diese Weise kann auch ein definiertes Einbringen von Festkörper oder Formkörperelementen in den Rohrreaktor erfolgen.

Gemäß einer Ausführungsform der Erfindung weist die Datenbasis ferner historische Versuchsdaten mit einer Korrelation zwischen den Füllmaterialien, den entsprechenden Füllstandshöhen und zugehörigen Katalyse-Prozessergebnissen auf, wobei die Datenbasis insbesondere einen Algorithmus aufweist, der aus zugeführten Daten von Füllmaterialien, den entsprechenden Füllstandshöhen und zugehörigen Katalyse-Prozessergebnissen einen Selbstlernprozess zu durchlaufen, insbesondere eine künstliche Intelligenz aufweist.

Auf diese Weise kann ein Erfahrungsschatz früherer Versuche und Tests genutzt werden, um dem Benutzer bei der Herstellung von Rohrreaktoren zu assistieren. Mittels künstlicher Intelligenz kann eine größere Korrelation zwischen den gemessenen Parametern und den Eigenschaften bzw. Testergebnissen der Rohrreaktoren hergestellt werden.

Gemäß einer Ausführungsform der Erfindung wird ein Verfahren zur Befüllung von Reaktoren bereitgestellt, umfassend: Auswahl eines Befüllungsplans und/oder Erstellung eines Befüllungsplans für eine Anordnung von Reaktoren, Implementierung und Überwachung des Befüllvorgangs, Registrierung von Zwischenergebnissen und Ergebnissen des Befüllvorgangs in einer Datenbank, wobei die Reaktoren mit pulverförmigen Materialien bestückt werden, wobei die Anzahl an Reaktoren in dieser Anordnung im Bereich 1 bis 100 Reaktoren liegt, insbesondere im Bereich von 2 bis 80 Reaktoren, insbesondere im Bereich von 4 bis 40 Reaktoren.

Gemäß einer Ausführungsform der Erfindung werden die pulverförmigen Materialien mehrschichtig in den Reaktoren angeordnet, wobei sich die Schichten in der Zusammensetzung unterscheiden.

Gemäß einer Ausführungsform der Erfindung wird eine graphische Bildschirmdarstellung bereitgestellt, in der die Anordnung der Reaktoren beziehungsweise die Anordnung einer Gruppe der Anordnung der Reaktoren dargestellt wird, wobei die grafische Darstellung insbesondere auch die Darstellung der Materialschichten umfasst, die in die einzelnen Reaktoren eingebracht werden.

Gemäß einer Ausführungsform der Erfindung umfasst die graphische Darstellung eine Markierung, in der eine untere und eine obere Zielposition eines Zielfensters dargestellt ist, welches senkrecht zur Längsachse angeordnet ist, wobei in der Darstellung insbesondere die gemessene Füllhöhe und die gewünschte Füllhöhe angezeigt werden.

Gemäß einer Ausführungsform der Erfindung ist das Verfahren computerimplementiert.

Gemäß einer Ausführungsform der Erfindung wird ein System zur Befüllung von Reaktoren bereit gestellt, wobei das System eine Befüllvorrichtung mit Präzisionswaage, eine Füllstandmessvorrichtung, eine mechanisches Verdichtungsvorrichtung und eine Drucktestvorrichtung umfasst.

Gemäß einer Ausführungsform der Erfindung ist die Vorrichtung mit einem Computer und einer Datenbank verbunden.

Gemäß einer Ausführungsform der Erfindung weisen die zur Befüllung vorgesehenen Reaktoren eine Länge auf, die im Bereich von 10 bis 250 cm liegt, insbesondere im Bereich von 15 bis 150 cm, insbesondere im Bereich von 20 bis 100 cm, wobei der Innendurchmesser der Reaktoren im Bereich von 4 bis 100 mm liegt, insbesondere im Bereich von 7 bis 60 mm, insbesondere im Bereich von 7 bis 40 mm.

Gemäß einer Ausführungsform der Erfindung umfasst das System zur Befüllung Reaktoren eines oder mehrere Einlegeelemente, die ausgewählt sind aus der Gruppe Katalysatorstuhl, poröser Formköper, Glaswollstopfen, Glaswollscheibe, keramische Kugeln.

Gemäß einer Ausführungsform der Erfindung wird ein Verfahren zur Befüllung von Reaktoren bereitgestellt unter Verwendung eines zuvor beschriebenen Systems wobei das Verfahren umfasst: (i) Befüllung von Reaktor mit pulverförmigem Material mit Durchführung einer Wägung, (ii) Füllhöhenbestimmung, insbesondere mit einem Lasermessgerät, (iii) mechanische Verdichtung, und (iv) Drucktest, wobei die Reihenfolge bei der Durchführung der Schritte variiert werden kann, wobei die Durchführung des Drucktestes gemäß des Schritts (iv) nach Abschluss des Befüllungsvorgangs durchgeführt wird, wobei die Durchführung der Füllhöhenbestimmung gemäß des Schrittes (ii) vor und/oder nach der Durchführung der mechanischen Verdichtung gemäß des Schritts (iii) erfolgt; wobei die Schritte (i) - (iv) für jeden Reaktor einer Anordnung von Reaktoren durchgeführt werden.

Gemäß einer Ausführungsform der Erfindung umfasst das Verfahren die Anordnung eines Katstuhls und/oder eines Unterbaus in den Reaktoren der Anordnung.

Gemäß einer Ausführungsform der Erfindung umfasst die Positionierung eines Katstuhls und/oder eines Unterbaus in den Reaktoren der Anordnung, dass das zur Befüllung vorgesehene Material beziehungsweise die zur Befüllung vorgesehenen Materialien in denjenigen Bereich der Reaktoren eingefüllt werden, der im Zentrum der Reaktoren liegt, wobei die Länge des mit Füllmaterial zu befüllenden Reaktorsegments im Bereich von 5 bis 500 mm liegt, insbesondere im Bereich von 15 bis 350 mm.

Gemäß einer Ausführungsform der Erfindung umfasst das Verfahren, dass die Anordnung der befüllten Reaktoren einer Durchführung von Funktionstests unterzogen wird, wobei die Funktionstest insbesondere mittels einer Apparatur zum Testen von Katalysatoren durchgeführt werden, wobei die mittels der Funktionstests erzielten Daten mit denjenigen Charakterisierungs-Daten korreliert werden, die beim Befüllvorgang gemäß dem zuvor beschriebenen Verfahren bestimmt wurden.

Diese und andere Merkmale werden anhand der folgenden Figurenbeschreibung erläutert.

### Kurze Beschreibung der Figuren

- Figur 1: zeigt einen Screenshot einer Eingabemaske zur Eingabe experimenteller Parameter gemäß einer Ausführungsform der Erfindung;
- Figur 2: zeigt einen Screenshot mit der Anzeige der Materialparameter gemäß einer Ausführungsform der Erfindung;
- Figur 3: zeigt eine schematische Darstellung eines Satzes mit 24 für eine Befüllung vorgesehenen Reaktoren gemäß einer Ausführungsform der Erfindung;
- Figur 4: zeigt einen Screenshot mit Parameterangaben zu ausgewählten Reaktoren mit Schüttung innerhalb eines Reaktors gemäß einer Ausführungsform der Erfindung;
- Figur 5: zeigt einen Screenshot mit der Angabe der Befüllung von einem Material in den unterschiedlichen Reaktoren gemäß einer Ausführungsform der Erfindung;
- Figur 6: zeigt einen Screenshot mit einer Angabe der charakteristischen Daten zur Befüllung eines einzelnen Reaktors gemäß einer Ausführungsform der Erfindung;
- Figur 7: zeigt eine schematische Darstellung des Ablaufes eines Befüllungsverfahrens für eine Gruppe von zehn Reaktoren gemäß einer Ausführungsform der Erfindung;
- Figur 8: zeigt eine schematische Darstellung der Vorrichtung gemäß einer Ausführungsform der Erfindung;
- Figur 9: zeigt eine detailliertere Darstellung der Vorrichtung gemäß einer Ausführungsform der Erfindung;
- Figur 10: zeigt einen Ablauf des Verfahrens gemäß einer Ausführungsform der Erfindung;
- Figur 11: zeigt einen Ablauf des Verfahrens mit Füllvorgängen für mehrere Füllmaterialien gemäß einer weiteren Ausführungsform der Erfindung;
- Figur 12: zeigt einen Ablauf des Verfahrens gemäß einer weiteren Ausführungsform der Erfindung mit einem Verdichten;
- Figur 13: zeigt einen Ablauf des Verfahrens mit einer Erfassung einer Benutzereingabe oder eines Messwertes gemäß einer Ausführungsform der Erfindung;
- Figur 14: zeigt einen Ablauf des Verfahrens mit einer modifizierten Schüttfolge gemäß einer Ausführungsform der Erfindung; und
- Figur 15: zeigt einen Ablauf des Verfahrens mit einem Positionieren eines Katstuhls gemäß einer weiteren Ausführungsform der Erfindung.

Weitere Merkmale und Vorteile der erfindungsgemäßen Verfahren und der Vorrichtung ergeben sich aus den Figuren und aus der zugehörigen Figurenbeschreibung. Es versteht sich, dass die vorstehend genannten und die nachstehend noch zu erläuternden Merkmale nicht nur in der jeweils angegebenen Kombination, sondern auch in anderen Kombinationen oder in Alleinstellung anwendbar sind ohne den Rahmen der vorliegenden Erfindung zu verlassen. Ausführungsbeispiele der Erfindung sind in den Figuren dargestellt und werden nachfolgend im Detail beschrieben.

### Detaillierte Beschreibung beispielhafter Ausführungsformen

Gemäß der Erfindung wird ein Verfahren zur Befüllung von Reaktoren bereitgestellt, insbesondere mit einer relationalen Datenbank zur Auswertung von Prozessdaten aus katalytischen Testuntersuchungen. Das Verfahren kann in Verbindung mit der Auswertung von Prozessdaten, die mittels Hochdurchsatzapparaturen generiert wurden, verwendet werden.

Die Parameter zur Befüllung der Reaktoren werden in einer Datenbank gespeichert, vorzugweise sind die gespeicherten Daten sowohl in graphischer als auch in tabellarischer Form darstellbar. Die Werte der katalytischen Testuntersuchungen werden ebenfalls in einer Datenbank abgelegt. Zwischen den Datenbanken besteht eine Korrelation, sodass die Eigenschaften von Reaktorfüllungen, den Füllparametern, und katalytischen Daten gegeben ist. Es wird eine Bewertung der katalytischen Testuntersuchungen vorgenommen, die mit den Werten der Befüllung und den Befüllparametern verglichen werden. Es können gezielt Unterschiede ermittelt werden, die mit Befüllung in Verbindung stehen. Mittels des Verfahrens und der damit verbundenen Datenbank ist es möglich, eine große Anzahl von Datensätze zu speichern und auch unterschiedliche Untersuchungsergebnisse aus unterschiedlichen Testreihen zu vergleichen.

Der Befüllvorgang ist komplex und dadurch empfindlich gegenüber Variationen. Die Entmischung von pulverförmigen Partikeln kann erfolgen. Elektrostatische Aufladung kann den Befüllungsprozess stören. Teilweise wird die Störung durch elektrostatische Ladung dadurch reduziert, dass die pulverförmigen Katalysatoren mit einem gewissen Restfeuchtegehalt in die Reaktoren befüllt werden. Die Restfeuchte kann bei der Durchführung des Verfahrens bestimmt werden, so dass die Menge an Restfeuchtigkeit bei der Einwaage und der Durchführung des Verfahrens berücksichtigt werden kann.

Von Bedeutung ist auch die Beimischung von Inertmaterialien in pulverfömiger Form beziehungsweise der Anfertigung von Mischungen aus Katalysatormaterial und Inertmaterialien. Die Beimischung von Inertmaterialien kann verwendet werden, wenn besonders geringe Mengen an pulverförmiger Katalysatorprobe zur Verfügung stehen. Es können unterschiedliche Inertmaterialien ausgewählt werden, die sich beispielsweise auch in der Partikelgröße voneinander unterscheiden. Bei Inertpartikeln kann es sich beispielsweise um Siliziumcarbid handeln, dass in pulverförmiger Form vorliegt. Die Inertpartikel können als unterschiedliche Proben mit unterschiedlichen Partikelgrößen und Partikelgrößenverteilungen vorliegen. Die Partikelgröße wird als durchschnittliche Partikelgröße angegeben und die Partikelgrößenverteilung besagt, dass ein bestimmter Anteil an Partikeln in einem gegebenen Größenbereich liegen kann. Beispielsweise kann die Partikelgrößenverteilung im Bereich von 50 bis 150 µm liegen, oder im Bereich von 250 bis 500 µm. Durch die Auswahl der Partikelgröße und die Größenverteilung sowie die Menge an beigesetztem Intertmaterial lässt sich der Druckabfall der über die Reaktorschüttung in gewissen Grenzen steuern.

Davon abgesehen können auch auch Extrudate in Inertpartikelschüttungen eingebettet werden. Extrudate sind Formkörper, deren Abmessungen größer sind als die Abmessungen von pulverförmigen Schüttungen. Hierbei ist anzumerken, dass bei Reaktoren mit geringen Innen-Volumina auch oftmals Mikro-Extrudate eingesetzt werden. Geringe Innen-Volumina sind diejenigen Reaktoren, die einen Durchmesser aufweisen, der ≦ 10 mm beträgt.

Eine Pulverschüttung im unverdichteten Zustand unterscheidet sich gegenüber einer Pulverschüttung im verdichteten Zustand dadurch, dass die Pulverschüttung im unverdichteten Zustand ein größeres Volumen im Reaktorraum ausfüllt. Die unverdichteten Schüttungen weisen oftmals eine geringe Stabilität auf. Eine mechanische Verdichtung der Pulverschüttung soll diese in einen Zustand überführen, so dass die Schüttung nach der Verdichtung einen stabilen Zustand einnimmt, der nicht durch äußere Einflüsse gestört wird.

Die Befüllung von pulverförmigen Materialien bezieht sich jedoch auf die Anordnung von geringen Mengen an Pulvern in Reaktoren, deren Innenräume nur durch die Rohrenden zugänglich sind. Die Anordnung von Stützvorrichtungen, auf denen die pulverförmigen Materialien im Reaktorrohr aufgeschichtet werden, ist oftmals noch mit einer hohen Genauigkeit möglich. Diesbezüglich können Katalysatorstühle oder poröse Ablagen in den Rohren angeordnet werden, die an speziellen Rohrkanten fixiert werden, die in den Innenraum der Rohre eingearbeitet wurden. Zusätzlich ist festzustellen, dass die Reaktoren häufig aus Metall sind, was dazu führt, dass die Position des in den Reaktor eingefüllten Materials nicht genau zu erkennen ist. Beispielsweise kann das in den Reaktor eingefüllte Material eine Mulde aufweisen, oder eine Schräge, so dass das pulverförmige Material nicht in einer Ebene liegt. Die mechanische Verdichtung umfasst auch einen Prozess, damit die Partikelschüttung gleichmäßig verteilt ist und die Oberfläche der Schüttung eine planparallele Ebene bildet, die senkrecht zur Reaktorrohrachse angeordnet ist.

Ein weiterer Aspekt des erfindungsgemäßen Verfahrens bezieht sich auf die Anordnung von Schichtstrukturen beziehungsweise mehrstufigen Schichten innerhalb eines einzelnen Reaktors.

Eine mehrstufige Befüllung eines Reaktors ist dann gegeben, wenn in einem Reaktor mehrere Schüttungen angeordnet werden, die sich in der Zusammensetzung unterscheiden. Mehrstufige Befüllungen sind störanfälliger, da es zur Durchmischung von den Materialien im Bereich der Grenzflächen kommen kann.

Gemäß einem weiteren Aspekt werden die Daten aus den katalytischen Untersuchungen in Bezug auf die Position der Reaktoren in der Apparatur zur Testung von Katalysatoren ausgewertet.

In einer Ausführungsform umfasst das Verfahren einen Editor, in dem Sollparameter zur Durchführung der Befüllung erfasst werden, wobei diese Parameter ausgewählt sind aus der Gruppe Materialparameter, Art des Materials, mittlere Partikeldurchmesser, Partikelgrößenverteilung, und Schütthöhe. Die Sollparameter können als Basis für eine Rezeptur verwendet werden, die dem Benutzer als Assistenz bei der Herstellung von Rohrreaktoren dient.

In einer weiteren Ausführungsform umfasst das Verfahren auch eine Charakterisierung des befüllten Reaktors nach der Durchführung des Funktionstests und die Erfassung der hierbei ermittelten Daten in einer Datenbank. Bei dem Katalysatormaterial, das nach der Durchführung des Funktionstests im Reaktor vorliegt, ist ein deaktiviertes Katalysatormaterial, das in Verbindung mit der Durchführung des Funktionstests einen gewissen Abnutzungsgrad erreicht hat. Das nach dem Ausbau erhaltene Katalysatormaterial wird auch als Ausbaukatalysator bezeichnet, der anschließend einer eigenen Feststoffcharakterisierung zugeführt werden kann, die beispielsweise Charakterisierungsmethoden wie Oberflächenanalyse (N2 Adsoption), Kristallstrukturanalyse, chemische Analyse umfassen kann. In keiner Weise ist es dabei ausgeschlossen, den Ausbau des Katalysatormaterials in Schichten vorzunehmen.

Gemäß einer Ausführungsform des erfindungsgemäßen Verfahrens kann eine Charakterisierung der befüllten Reaktoren mittels Röntgenstrahlung vorgenommen werden. Die Charakterisierung der befüllten Reaktoren mittels Röntgenstrahlung kann zusätzlich zum Drucktest durchgeführt werden. Die Daten dieser Charakterisierung können in der Datenbank abgelegt werden. Die Charakterisierung mittels Röntgenstrahlung ergibt Informationen bezüglich der Homogenität von Schüttungen sowie darüber, ob eventuell eine Durchmischung von einzelnen Schüttzonen in den Grenzbereichen von Schüttungen vorliegen kann.

Für den Begriff Reaktor wird auch der Begriff Reaktionsrohr oder Liner verwendet.

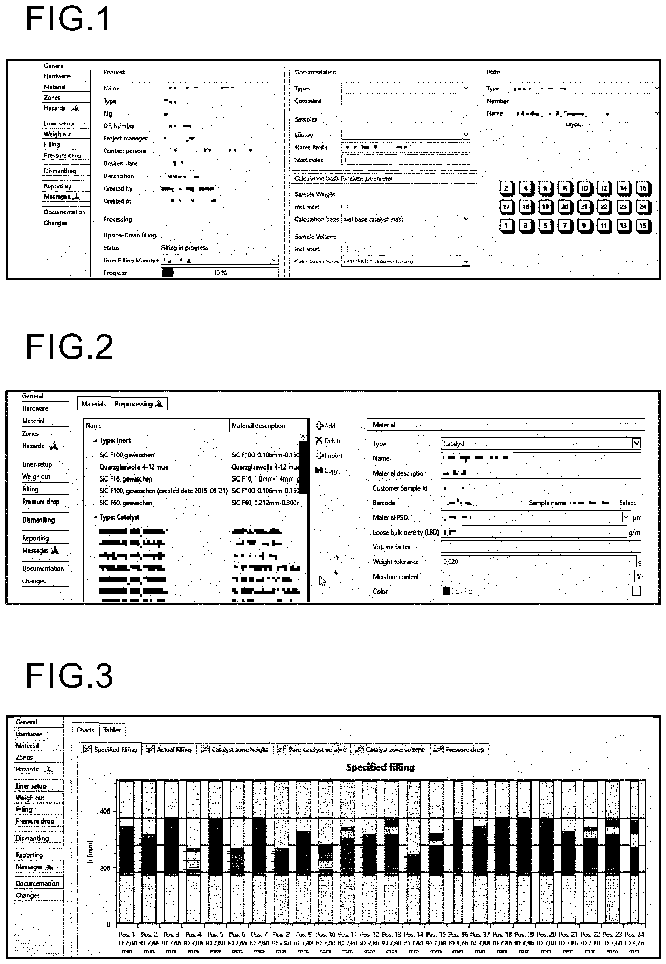

Figur 1 zeigt eine schematische Darstellung des Bildschirms mit der Anzeige des Editors beziehungsweise der Eingabemaske zur Eingabe der experimentellen Parameter, die ausgewählt sind aus der Gruppe Materialprobe, Dokumentation, ausgewählte Versuchsvorrichtung zur Durchführung der katalytischen Testuntersuchungen sowie auch eine Matrixdarstellung der Reaktorpositionen in einer sogenannten 3x8-Konfiguration.

Figur 2 zeigt eine schematische Darstellung des Bildschirms mit der Anzeige der Materialparameter in Bezug auf die Inert-Materialien und die Beschreibung der ausgewählten Probenmaterialien.

Figur 3 zeigt eine schematische Darstellung eines Satzes mit 24 für eine Befüllung vorgesehenen Reaktoren zusammen mit den Angaben zu der Dimensionierung der Reaktoren sowie dem Befüllstand, wobei sowohl der gemessene und der vorhergesagte Füllstand angezeigt werden beziehungsweise darstellbar sind.

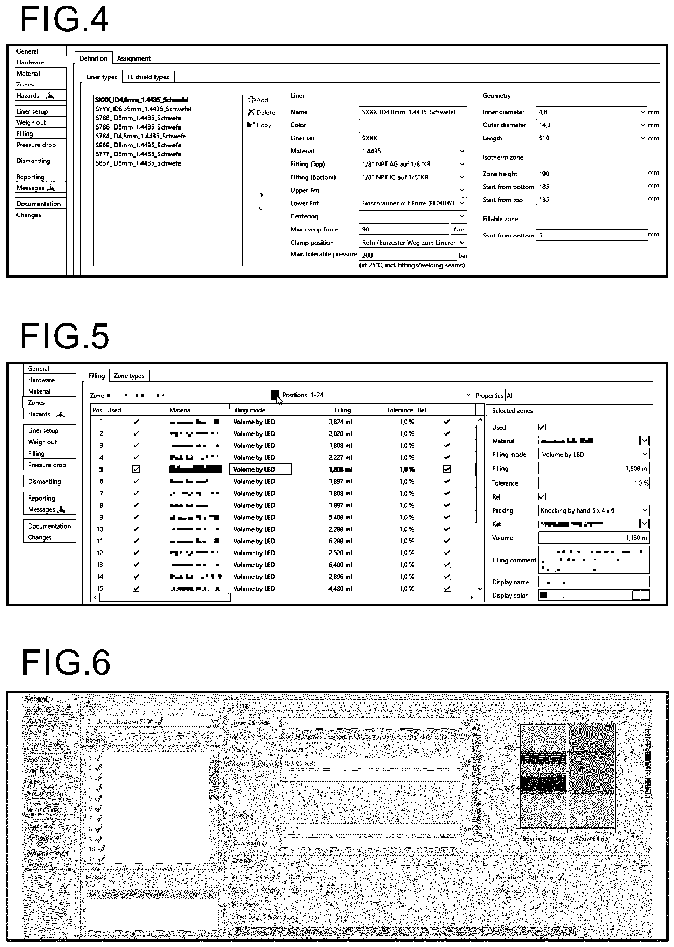

Figur 4 zeigt eine schematische Darstellung des Bildschirms mit den Parameterangaben zu den ausgewählten Reaktoren sowie der Positionierung der Schüttung innerhalb eines ausgewählten Reaktors beziehungsweise der Maske mit der Eingabe von Parametern zu einem ausgewählten Reaktor.

Figur 5 zeigt eine schematische Darstellung des Bildschirms mit der Angabe der Befüllung von einem Material in den unterschiedlichen Reaktoren, die für die Positionen mit den Nummern 1 bis 15 vorgesehen sind, sowie die Befüllvolumina in den einzelnen Reaktoren;

Figur 6 zeigt eine schematische Darstellung des Bildschirms mit einer Angabe der charakteristischen Daten zur Befüllung eines einzelnen Reaktors zusammen mit einer grafischen Darstellung des dazugehörigen ausgewählten Reaktors mit der vom Benutzer spezifizierten Befüllung sowie der tatsächlichen Befüllung.

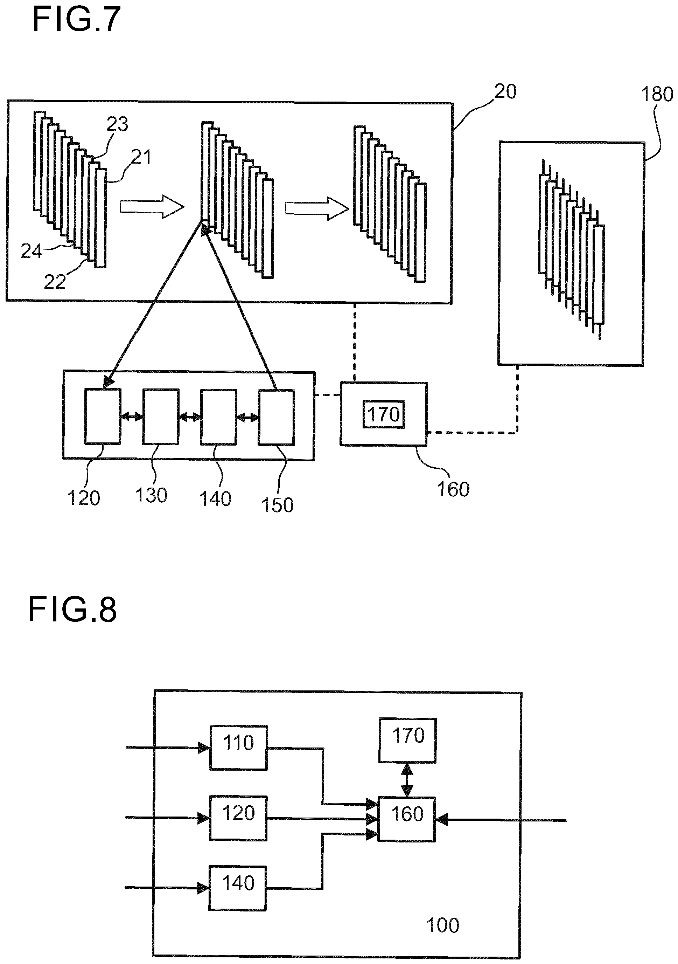

Figur 7 zeigt eine schematische Darstellung des Ablauf eines Befüllungsverfahrens für Reaktoranordnung 20 mit einer Gruppe von zehn Reaktoren 21, 22, 23,24, die den Schritten des Befüllungsverfahrens zugeführt werden, wobei die Daten des Befüllungsverfahrens in einer Datenbank bzw. Datenbasis 170 gespeichert werden; die befüllten Reaktoren werden in einer Apparatur zur Testung von Katalysatoren 180 eingesetzt und einem katalytischen Testungen unterzogen, wobei die Ergebnisse der Testung nach einer Verarbeitung in einer Datenverarbeitungsvorrichtung 160 in der Datenbank bzw. Datenbasis 170 gespeichert werden, die die Daten zur Befüllung der Reaktoren umfasst. Das System bzw. die Vorrichtung 100 weist eine Benutzerauswahl-Erfassungsvorrichtung 110, eine Füllmaterialmengenerfassungsvorrichtung 120, eine mechanische Verdichtungsvorrichtung 130 und eine Füllstandshöhenerfassungsvorrichtung 140, sowie in der hier gezeigten Ausführungsform eine Drucktestvorrichtung 150 auf.

Figur 8 zeigt den schematischen Aufbau des Systems mit den Kommunikationsflüssen. Die Komponenten entsprechen denen der Figur 7 mit gleichen Bezugszeichen.

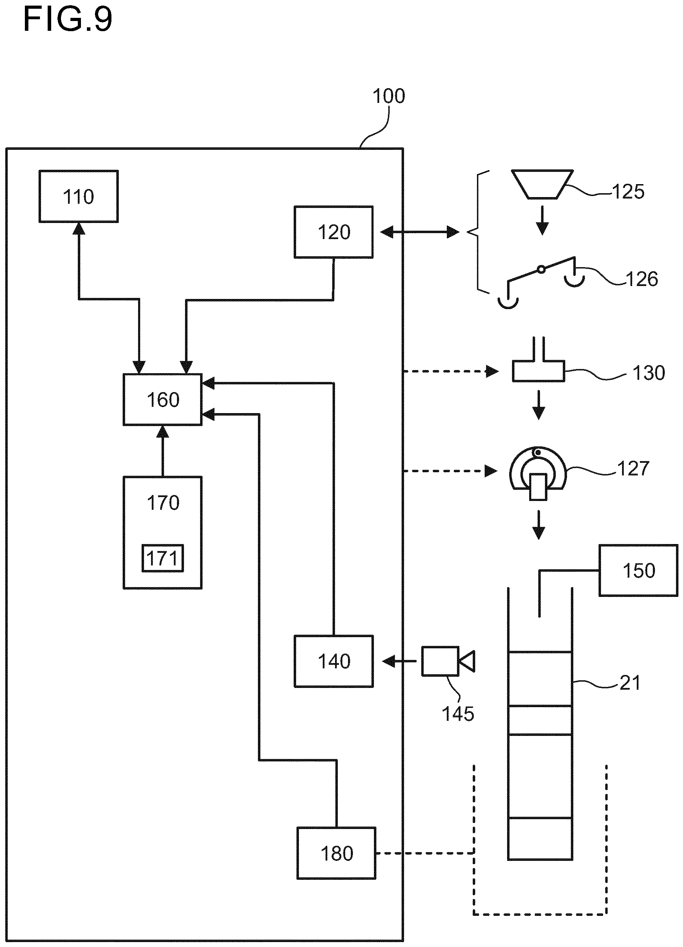

Figur 9 zeigt eine detaillierte Darstellung der Vorrichtung 100 auf. Die Vorrichtung 100 zur Assistenz und Dokumentation einer Rohrreaktorherstellung weist eine Benutzerauswahl-Erfassungsvorrichtung 110 auf zur Erfassung der Benutzereingaben. Diese kann auch zu Ausgaben an den Benutzer dienen. Ferner ist eine Füllmaterialmengenerfassungsvorrichtung 120 vorgesehen, die Füllmengen erfasst, etwa durch Benutzereingabe oder durch Daten, die sie von einer Befüllvorrichtung 125 erhält. Dazu können auch Daten von einer Wiegevorrichtung 126 zählen. Die Datenverarbeitungsvorrichtung 160 empfängt Daten von der Füllmaterialmengenerfassungsvorrichtung 120 und der Benutzerauswahl-Erfassungsvorrichtung 110, sowie von einer Füllstandshöhenerfassungsvorrichtung 140. Diese kann entweder Benutzereingaben zur Füllstandshöhe erfassen, oder Daten von einer Füllstandmessvorrichtung 145. Darüber hinaus kann eine Positioniervorrichtung 127 zur Positionierung von Baukomponenten eines Rohrreaktors vorgesehen sein, die beispielsweise von der Vorrichtung 100 angesteuert wird. Ferner kann eine mechanische Verdichtungsvorrichtung vorgesehen sein, die das eingefüllte Füllmaterial im Reaktor 21 verdichtet. Die Ansteuerung kann durch die Vorrichtung 100 erfolgen. Weiterhin kann eine Drucktestvorrichtung 150 vorgesehen sein, die eine Drucktestung des fertig gefüllten Reaktors vornimmt. Die Daten könne in einer Datenbasis bzw. Datenbank 170 abgelegt werden. Dort kann eine Art von künstlicher Intelligenz 171 vorgesehen sein, die eine Korrelation zwischen den Herstellungsparametern und den von einer Katalyse-Prozessvorrichtung 180 gemessenen Eigenschaften der Rohrreaktoren 21 herstellen kann.

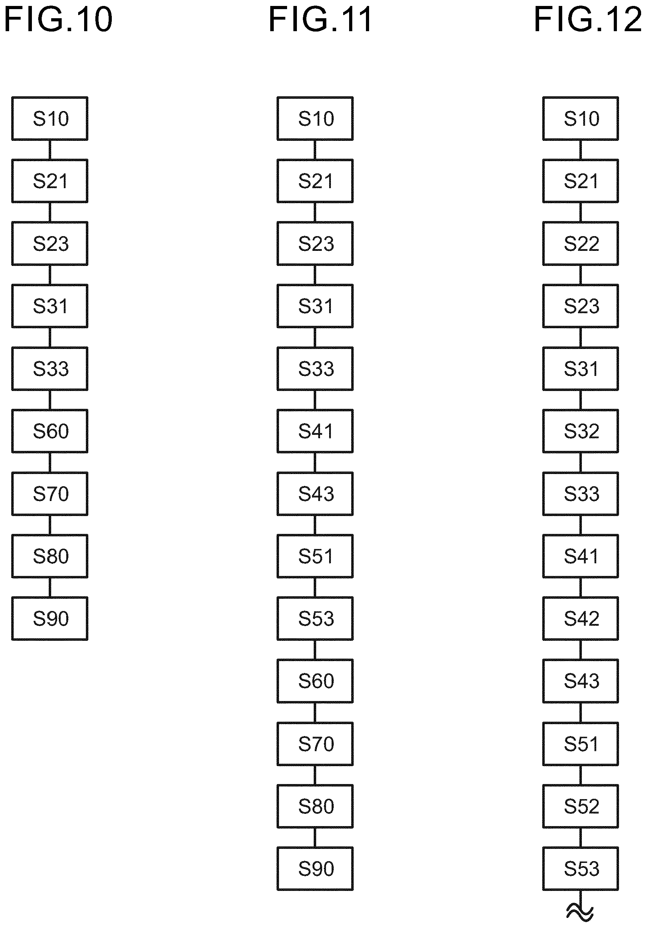

Figur 10 zeigt einen Ablauf des Verfahrens gemäß einer Ausführungsform der Erfindung, bei der eine Füllmenge und ein Füllstand von zwei Füllmaterialien S21, S23, S31, S33 ermittelt wird, bevor ein Erfassen einer Füllstandshöhe S60 einer gesamten Höhe, ein Zuweisen in einer Datenbasis S70 der erfassten Parameter zu den Reaktoren und ein Durchführen eines Katalyse-Prozesses S80 erfolgt. Ein visualisiertes Darstellen der Füllhöhe S90 kann optional vorgenommen werden.

Figur 11 zeigt einen Ablauf des Verfahrens mit Füllvorgängen für mehrere Füllmaterialien gemäß einer weiteren Ausführungsform der Erfindung, bei der beispielhaft eine Füllmenge und ein Füllstand von vier Füllmaterialien ermittelt wird S21, S23, S31, S33, S41, S43, S51, S53, bevor ein Erfassen einer Füllstandshöhe S60 einer gesamten Höhe, ein Zuweisen in einer Datenbasis S70 der erfassten Parameter zu den Reaktoren und ein Durchführen eines Katalyse-Prozesses S80 erfolgt. Ein visualisiertes Darstellen der Füllhöhe S90 kann optional vorgenommen werden.

Figur 12 zeigt einen Ablauf des Verfahrens gemäß einer weiteren Ausführungsform der Erfindung mit einem Verdichten, bei dem zwischen dem Erfassen einer Füllmenge S21, S31, S41, S51 einerseits und der Erfassung einer Füllhöhe S23, S33, S43, S53 andererseits jeweils ein insbesondere mechanisches Verdichten S22, S32, S42, S52 erfolgt, bevor ein Erfassen einer Füllstandshöhe S60 einer gesamten Höhe, ein Zuweisen in einer Datenbasis S70 der erfassten Parameter zu den Reaktoren und ein Durchführen eines Katalyse-Prozesses S80 erfolgt. Ein visualisiertes Darstellen der Füllhöhe S90 kann optional vorgenommen werden.

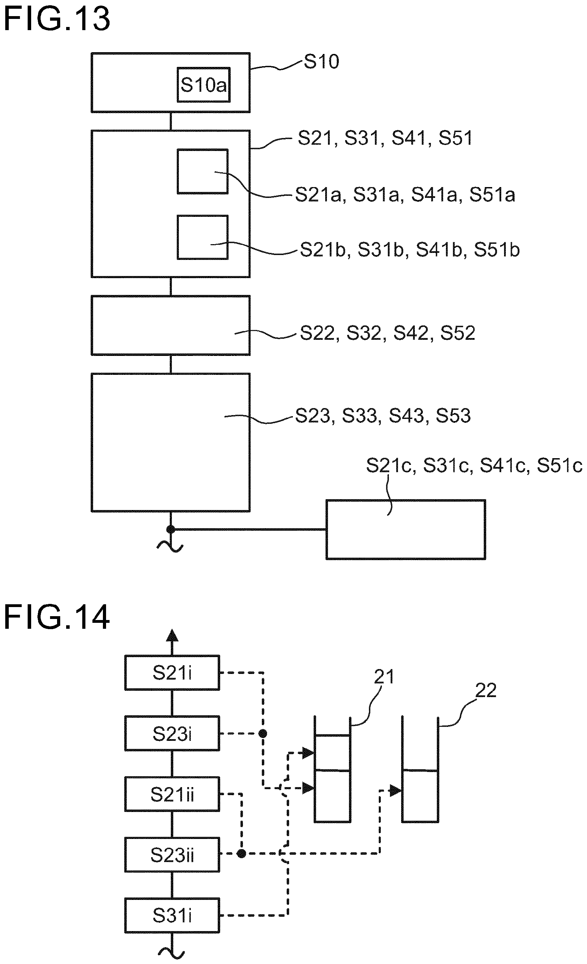

Figur 13 zeigt einen Ablauf des Verfahrens mit einer Erfassung einer Benutzereingabe oder eines Messwertes gemäß einer Ausführungsform der Erfindung, bei der das Erfassen einer Füllmenge S21, S31, S41, S51 ein Erfassen einer Benutzereingabe S21a, S31a, S41a, S51a und bzw. oder ein Erfassen eines Messwertes von einer Messvorrichtung S21b, S31b, S41b, S51b umfasst. Bei einer Erfassung der Benutzereingabe und des Messwertes einer Messvorrichtung können die beiden Werte miteinander verglichen werden und bei einer signifikanten Abweichung eine Warnung ausgegeben werden. Zusätzlich oder optional kann nach der Erfassung der Füllstandshöhe S23, S33, S43, S53 eine Rückmeldung betreffend einer Füllstandshöhe an den Benutzer ausgegeben werden S21c, S31c, S41c, S51c. Zusätzlich oder optional kann, obgleich hier nicht gezeigt, bei dem Erfassen einer Füllhöhe S23, S33, S43, S53 ein Erfassen einer Benutzereingabe und bzw. oder ein Erfassen eines Messwertes von einer Messvorrichtung erfolgen. Auch hier kann ein Vergleich dieser Erfassungen vorgenommen werden und ggf. eine Warnung bei einer signifikanten Abweichung erfolgen.

Figur 14 zeigt einen Ablauf des Verfahrens mit einer modifizierten Schüttfolge gemäß einer Ausführungsform der Erfindung, bei der zuerst ein Befüllen mit einem ersten Füllmaterial S21i und einer Erfassung einer Füllstandshöhe S23i eines ersten Reaktors 21, sowie ein Befüllen mit einem ersten Füllmaterial S21ii und einer Erfassung einer Füllstandshöhe S23ii eines zweiten Reaktors 22 erfolgt, bevor ein Befüllen S31i mit einem zweiten Füllmaterial erfolgt.

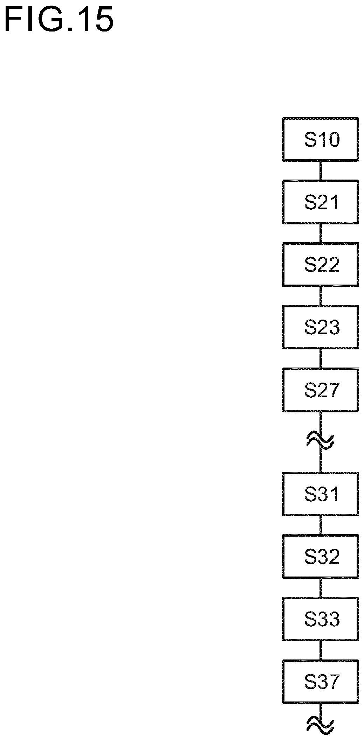

Figur 15 zeigt einen Ablauf des Verfahrens mit einem Positionieren S27, S37 eines Katstuhls gemäß einer weiteren Ausführungsform der Erfindung, bei der nach einem Erfassen einer Füllmenge eines ersten Füllmaterials S21, einem Verdichten S22 und einem Erfassen einer Füllstandshöhe S23 ein Positionieren S27 eines beispielsweise Katstuhls erfolgt, wobei bei der hier gezeigten Ausführungsform dann ein Erfassen einer Füllmenge eines zweiten Füllmaterials S31, einem Verdichten S32 und einem Erfassen einer Füllstandshöhe S33 ein Positionieren S37 eines weiteren Katstuhls erfolgt.

### Bezugszeichenliste:

- 20: Reaktoranordnung, Rohrreaktoranordnung
- 21, 22, 23, 24: erster, zweiter, dritter, vierter Reaktor/Rohrreaktor;
- 100: Vorrichtung zur Assistenz und Dokumentation einer Rohrreaktorherstellung
- 110: Benutzerauswahl-Erfassungsvorrichtung
- 120: Füllmaterialmengenerfassungsvorrichtung
- 125: Befüllvorrichtung
- 126: Wiegevorrichtung
- 127: Positioniervorrichtung
- 130: mechanische Verdichtungsvorrichtung
- 140: Füllstandshöhenerfassungsvorrichtung
- 145: Füllstandmessvorrichtung
- 150: Drucktestvorrichtung
- 160: Datenverarbeitungsvorrichtung
- 170: Datenbasis
- 171: künstliche Intelligenz
- 180: Katalyse-Prozessvorrichtung
- S10: Erfassen einer Auswahl eines Befüllungsplans durch einen Benutzer
- S10a: Erfassen eines vom Benutzer erstellten Befüllungsplans
- S21, S31, S41, S51: Erfassen einer Menge eines ersten Füllmaterials
- S21/31/41/51a: Erfassen einer Benutzereingabe
- S21/31/41/51b: Erfassen eines Messwertes
- S21/31/41/51c: Rückmeldung betr. Füllstandshöhe an den Benutzer
- S21i: Erfassen einer Menge eines ersten Füllmaterials für ersten Reaktor
- S21ii: Erfassen einer Menge eines ersten Füllmaterials für zweiten Reaktor
- S22, S32, S42, S52: Verdichten eines Füllmaterials
- S23, S33, S43, S53: Erfassen einer Füllstandshöhe eines Füllmaterials
- S23i: Erfassen Füllstandshöhe des ersten Füllmaterials für ersten Reaktor
- S23ii: Erfassen Füllstandshöhe des ersten Füllmaterials für zweiten Reaktor
- S27, S37: Positionieren eines Einlegeelementes
- S31i: Erfassen einer Menge eines zweiten Füllmaterials für ersten Reaktor
- S60: Erfassen einer Füllstandshöhe einer gesamten Höhe
- S70: Zuweisen in einer Datenbasis;
- S80: Durchführen eines Katalyse-Prozesses
- S90: visualisiertes Darstellen der Füllhöhe

## Patentansprüche

1. Verfahren zur Assistenz und Dokumentation einer Befüllung von Rohrreaktoren (21, 22, 23, 24), umfassend:
Erfassen einer Benutzerauswahl (S10) eines Befüllungsplans für eine Anordnung von Rohrreaktoren;
Erfassen einer Menge eines ersten Füllmaterials (S21), mit dem ein Rohrreaktor aus der Anordnung von Rohrreaktoren befüllt wurde;
Erfassen einer Füllstandshöhe des ersten Füllmaterials (S23), mit dem ein Rohrreaktor aus der Anordnung von Rohrreaktoren befüllt wurde;
Erfassen einer Menge eines zweiten Füllmaterials (S31), mit dem ein Rohrreaktor aus der Anordnung von Rohrreaktoren befüllt wurde;
Erfassen einer Füllstandshöhe des zweiten Füllmaterials (S33), mit dem ein Rohrreaktor aus der Anordnung von Rohrreaktoren befüllt wurde;
Erfassen einer Füllstandshöhe einer gesamten Höhe (S60) von allen Füllmaterialien in dem jeweiligen Rohrreaktor;
Zuweisen (S70) der erfassten Mengen von Füllmaterial und der erfassten Füllstandshöhen in einer Datenbasis;
Durchführen eines Katalyse-Prozesses (S80) an dem jeweiligen Rohrreaktor und Korrelieren eines Ergebnisses des Katalsye-Prozesses mit den erfassten Mengen von Füllmaterial und den erfassten Füllstandshöhen in der Datenbasis.

2. Verfahren gemäß Anspruch 1, wobei nach dem Erfassen einer Füllstandshöhe des zweiten Füllmaterials (S33) und vor dem Erfassen einer Füllstandshöhe einer gesamten Höhe (S60) eine vorgebbare Anzahl mal ein Erfassen einer Menge eines weiteren Füllmaterials (S41, S51), mit dem ein Rohrreaktor aus der Anordnung von Rohrreaktoren befüllt wurde, und ein Erfassen einer Füllstandshöhe (S43, S53) des weiteren Füllmaterials, mit dem ein Rohrreaktor aus der Anordnung von Rohrreaktoren befüllt wurde, erfolgt.

3. Verfahren gemäß einem der vorhergehenden Ansprüche, wobei zwischen dem Erfassen einer Menge des jeweiligen Füllmaterials (21, 31, 41, 51) und dem
Erfassen einer Füllstandshöhe (23, 33, 43, 53) des jeweiligen Füllmaterials ein Ansteuern eines Verdichtens (S22, S32, S42, S52) des jeweiligen Füllmaterials erfolgt.

4. Verfahren gemäß einem der vorhergehenden Ansprüche, wobei Erfassen einer Menge des jeweiligen Füllmaterials (S21, S31, S41, S51) ein Erfassen einer Benutzerangabe (S21a, S31a, S41a, S51a) der Menge des jeweiligen Füllmaterials oder ein Erfassen eines Messwertes (S21b, S31b, S41b, S51b) einer Dosiervorrichtung zum Dosieren einer Menge des jeweiligen Füllmaterials umfasst.

5. Verfahren gemäß einem der vorhergehenden Ansprüche, wobei Erfassen einer Füllstandshöhe (S23, S33, S43, S53) ein Erfassen einer Benutzerangabe (S23a, S33a, S43a, S53a) der Füllstandshöhe oder ein Erfassen eines Messwertes (S23b, S33b, S43b, S53b) einer Füllstandshöhenmessvorrichtung zum Messen einer Füllstandshöhe umfasst.

6. Verfahren gemäß einem der vorhergehenden Ansprüche, wobei Erfassen einer Benutzerauswahl (S10) eines Befüllungsplans für eine Anordnung von Rohrreaktoren ein Erfassen eines von einem Benutzer erstellten Befüllungsplans (S10a) für eine Anordnung von Rohrreaktoren umfasst.

7. Verfahren gemäß einem der vorhergehenden Ansprüche, wobei nach einem Erfassen einer Füllstandshöhe eine Rückmeldung an den Benutzer erfolgt (S23c, S33c, S43c, S53c), ob die erfasste Füllstandshöhe einer erwarteten Füllstandshöhe entspricht, auf der Grundlage der Menge von Füllmaterialien, einem Verdichtungskoeffizienten des bzw. der jeweiligen Füllmaterialien und einem Verdichtungsdruck.

8. Verfahren gemäß einem der vorhergehenden Ansprüche, wobei das Verfahren eine Assistenz und eine Dokumentation einer Befüllung von wenigstens einem ersten Rohrreaktor (21) und einem zweiten Rohrreaktor (22) umfasst, wobei vor dem
Erfassen einer Menge eines zweiten Füllmaterials (S31i) mit dem der erste Rohrreaktor (21) aus der Anordnung von Rohrreaktoren befüllt wurde, ein
Erfassen einer Menge eines ersten Füllmaterials (S21i), mit dem der erste Rohrreaktor (21) aus der Anordnung von Rohrreaktoren befüllt wurde, ein
Erfassen einer Füllstandshöhe des ersten Füllmaterials (S23i), mit dem der erste Rohrreaktor (21) aus der Anordnung von Rohrreaktoren befüllt wurde, ein
Erfassen einer Menge eines ersten Füllmaterials (S21ii), mit dem der zweite Rohrreaktor (22) aus der Anordnung von Rohrreaktoren befüllt wurde, sowie ein
Erfassen einer Füllstandshöhe des ersten Füllmaterials (S23ii), mit dem der zweite Rohrreaktor (22) aus der Anordnung von Rohrreaktoren befüllt wurde,
erfolgt.

9. Verfahren gemäß einem der vorhergehenden Ansprüche, wobei das Verfahren ferner ein Positionieren (S27, S37) eines Einlegeelementes in dem jeweiligen Rohrreaktor umfasst, wobei das Einlegelement ausgewählt ist aus einer Gruppe bestehend aus einem Katalysatorstuhl, einem porösen Formköper, einem Glaswollstopfen, einer Glaswollscheibe, keramischen Kugeln und einem Unterbau, wobei Füllmaterialien insbesondere in denjenigen Bereich der Rohrreaktoren eingefüllt werden, der im Zentrum der Rohrreaktoren liegt, wobei die Länge eines mit Füllmaterial zu befüllenden Rohrreaktorsegments insbesondere im Bereich von 5 bis 500 mm liegt, insbesondere im Bereich von 15 bis 350 mm.

10. Verfahren gemäß einem der vorhergehenden Ansprüche, wobei das Verfahren eine visualisiertes Darstellen (S90) einer Markierung umfasst, in der eine untere und eine obere Zielposition eines Zielfensters dargestellt ist, welches senkrecht zur Längsachse des jeweiligen Rohrreaktors angeordnet ist, in der die erfasste Füllhöhe und eine gewünschte Füllhöhe angezeigt wird.

11. Verfahren gemäß einem der vorhergehenden Ansprüche, wobei nach einem Erfassen einer Füllstandshöhe dieser Wert mit einer vorgebbaren Toleranz aus dem Befüllungsplan verglichen wird und bei einem Unterschreiten der Toleranz das zuvor befüllte Material nachdosiert wird, oder bei einem Überschreiten der Toleranz das zuvor befüllte Material entfernt wird, um in ein vorgebbares Toleranzfeld zu gelangen.

12. Vorrichtung zur Assistenz und Dokumentation einer Befüllung von Rohrreaktoren, die ausgelegt ist ein Verfahren zur Assistenz und Dokumentation einer Befüllung von Rohrreaktoren gemäß einem der Ansprüche 1 bis 10 durchzuführen, aufweisend:
Benutzerauswahl-Erfassungsvorrichtung (110) zum Erfassen einer Benutzerauswahl eines Befüllungsplans für eine Anordnung von Rohrreaktoren;
Füllmaterialmengenerfassungsvorrichtung (120) zum Erfassen einer Menge eines Füllmaterials, mit dem ein Rohrreaktor aus der Anordnung von Rohrreaktoren befüllt wurde;
Füllstandshöhenerfassungsvorrichtung (140) zum Erfassen einer Füllstandshöhe eines einzelnen Füllmaterials und einer gesamten Höhe von allen Füllmaterialien, mit dem bzw. denen ein Rohrreaktor aus der Anordnung von Rohrreaktoren befüllt wurde;
Datenverarbeitungsvorrichtung (160) zur Zuweisung der erfassten Mengen von Füllmaterial und der erfassten Füllstandshöhen in einer Datenbasis (170), wobei die Datenverarbeitungsvorrichtung ausgeführt ist ein Ergebnisses eines Katalyse-Prozesses mit den erfassten Mengen von Füllmaterial und den erfassten Füllstandshöhen in der Datenbasis zu korrelieren.

13. Vorrichtung gemäß Anspruch 12, wobei die Vorrichtung eine Katalyse-Prozessvorrichtung (180) aufweist, die ausgeführt ist, um an einem jeweiligen Rohrreaktor einen Katalyse-Prozess durchzuführen und Ergebnisse des Katalyse-Prozesses mit den erfassten Mengen von Füllmaterial und den erfassten Füllstandshöhen in der Datenbasis zu korrelieren.

14. Vorrichtung gemäß einem der Ansprüche 12 und 13, wobei die Vorrichtung ferner aufweist: eine Befüllvorrichtung (125) mit einer Wiegevorrichtung (126) zum Erfassen und Befüllen des jeweiligen Rohrreaktors (21, 22, 23, 24) mit einem Füllmaterial; eine mechanische Verdichtungsvorrichtung (130) zur Verdichtung des eingefüllten Füllmaterials in dem jeweiligen Rohrreaktor; und eine Füllstandmessvorrichtung (145) zur Erfassung einer Füllstandshöhe des jeweiligen Füllmaterials bzw. einer Gesamtheit der Füllmaterialien in dem jeweiligen Rohrreaktor, wobei die Verdichtungsvorrichtung und die Füllstandshöhenmessvorrichtung insbesondere dazu ausgelegt sind Rohrreaktoren zu befüllen, die eine Länge aufweisen, die im Bereich von 10 bis 250 cm liegt, insbesondere im Bereich von 15 bis 150 cm, insbesondere im Bereich von 20 - 100 cm, und einen Innendurchmesser aufweisen, der im Bereich von 4 bis 100 mm liegt, insbesondere im Bereich von 7 bis 60 mm, insbesondere im Bereich von 7 bis 40 mm.

15. Vorrichtung gemäß einem der Ansprüche 12 bis 14, wobei die Vorrichtung ferner eine Drucktestvorrichtung (150) umfasst zur Überprüfung der Druckfestigkeit der Gesamtheit der verdichteten Füllmaterialien.

16. Vorrichtung gemäß einem der Ansprüche 12 bis 15, wobei die Vorrichtung eine Positioniervorrichtung (127) aufweist, die ausgelegt ist Einlegeelemente in den jeweilige Rohrreaktoren zu positionieren, wobei die Einlegelemente ausgewählt sind aus einer Gruppe bestehend aus einem Katalysatorstuhl, einem porösen Formköper, einem Glaswollstopfen, einer Glaswollscheibe und keramische Kugeln.

17. Vorrichtung gemäß einem der Ansprüche 12 bis 16, wobei die Datenbasis (170) ferner historische Versuchsdaten mit einer Korrelation zwischen den Füllmaterialien, den entsprechenden Füllstandshöhen und zugehörigen Katalyse-Prozessergebnissen aufweist, wobei die Datenbasis insbesondere einen Algorithmus aufweist, der aus zugeführten Daten von Füllmaterialien, den entsprechenden Füllstandshöhen und zugehörigen Katalyse-Prozessergebnissen einen Selbstlernprozess zu durchlaufen, insbesondere eine künstliche Intelligenz (171) aufweist.

## Claims

1. A method of assisting and documenting a filling of tubular reactors (21, 22, 23, 24), comprising:
recording of a user selection (S10) of a filling plan for an arrangement of tubular reactors;
recording of an amount of a first filling material (S21) with which a tubular reactor from the arrangement of tubular reactors has been filled;
recording of a fill level height of the first filling material (S23) with which a tubular reactor from the arrangement of tubular reactors has been filled;
recording of an amount of a second filling material (S31) with which a tubular reactor from the arrangement of tubular reactors has been filled;
recording of a fill level height of the second filling material (S33) with which a tubular reactor from the arrangement of tubular reactors has been filled;
recording of a fill level height of a total height (S60) of all filling materials in the respective tubular reactor;
assigning (S70) of the recorded amounts of filling material and the recorded fill level heights in a data basis;
performing a catalysis process (S80) in the respective tubular reactor and correlating a result of the catalysis process with the recorded amounts of filling material and the recorded fill level heights in the data basis.

2. The method according to claim 1, wherein, after the recording of a fill level height of the second filling material (S33) and before the recording of a fill level height of a total height (S60), there is a definable number of instances of recording of an amount of a further filling material (S41, S51) with which a tubular reactor from the arrangement of tubular reactors has been filled, and recording of a fill level height (S43, S53) of the further filling material with which a tubular reactor from the arrangement of tubular reactors has been filled.

3. The method according to either of the preceding claims, wherein, between the recording of an amount of the respective filling material (21, 31, 41, 51) and the recording of a fill level height (23, 33, 43, 53) of the respective filling material, a compacting (S22, S32, S42, S52) of the respective filling material is actuated.

4. The method according to any of the preceding claims, wherein recording of an amount of the respective filling material (S21, S31, S41, S51) comprises a recording of a user statement (S21a, S31a, S41a, S51a) of the amount of the respective filling material or a recording of a measurement (S21b, S31b, S41b, S51b) from a metering device for metering in an amount of the respective filling material.

5. The method according to any of the preceding claims, wherein recording of a fill level height (S23, S33, S43, S53) comprises a recording of a user statement (S23a, S33a, S43a, S53a) of the fill level height or a recording of a measurement (S23b, S33b, S43b, S53b) from a fill level height measuring device for measuring of a fill level height.

6. The method according to any of the preceding claims, wherein recording of a user selection (S10) of a filling plan for an arrangement of tubular reactors comprises recording of a filling plan (S10a) created by a user for an arrangement of tubular reactors.

7. The method according to any of the preceding claims, wherein, after recording of a fill level height, a report is made to the user (S23c, S33c, S43c, S53c) as to whether the recorded fill level height corresponds to an expected fill level height, on the basis of the amount of filling materials, a compaction coefficient of the respective filling material(s) and a compaction pressure.

8. The method according to any of the preceding claims, wherein the method comprises assistance and documentation of a filling of at least one first tubular reactor (21) and one second tubular reactor (22), wherein the
recording of an amount of a second filling material (S31i) with which the first tubular reactor (21) from the arrangement of tubular reactors has been filled is preceded by
recording of an amount of a first filling material (S21i) with which the first tubular reactor (21) from the arrangement of tubular reactors has been filled,
recording of a fill level height of the first filling material (S23i) with which the first tubular reactor (21) from the arrangement of tubular reactors has been filled,
recording of an amount of a first filling material (S21ii) with which the second tubular reactor (22) from the arrangement of tubular reactors has been filled, and
recording of a fill level height of the first filling material (S23ii) with which the second tubular reactor (22) from the arrangement of tubular reactors has been filled.

9. The method according to any of the preceding claims, wherein the method further comprises positioning (S27, S37) of an insert element in the respective tubular reactor, wherein the insert element is selected from a group consisting of a catalyst rest, a porous shaped body, a glass wool plug, a glass wool disk, ceramic beads and a substructure, wherein filling materials are introduced especially into that region of the tubular reactors that is in the center of the tubular reactors, with the length of a tubular reactor segment to be filled with filling material being especially in the range from 5 to 500 mm, especially in the range from 15 to 350 mm.

10. The method according to any of the preceding claims, wherein the method comprises a visualized representation (S90) of a marking showing a lower and an upper target position of a target window arranged at right angles to the longitudinal axis of the respective tubular reactor, indicating the recorded fill height and a desired fill height.

11. The method according to any of the preceding claims, wherein, after recording of a fill level height, this value is compared with a definable tolerance from the filling plan and, in the event that the value is below the tolerance, the material previously introduced is metered in, or, in the event of exceedance of the tolerance, the material previously introduced is removed in order to arrive within a definable tolerance field.

12. An apparatus for assistance and documentation of a filling of tubular reactors, designed to perform a method of assistance and documentation of a filling of tubular reactors according to any of claims 1 to 10, comprising:
user selection recording device (110) for recording a user selection of a filling plan for an arrangement of tubular reactors;
filling material volume recording device (120) for recording an amount of a filling material with which a tubular reactor from the arrangement of tubular reactors has been filled;
fill level height recording device (140) for recording a fill level height of a single filling material and a total height of all filling materials with which a tubular reactor from the arrangement of tubular reactors has been filled;
data processing device (160) for assignment of the recorded amounts of filling material and the recorded fill level heights in a data basis (170), wherein the data processing device is designed to correlate a result of a catalysis process with the recorded amounts of filling material and the recorded fill level heights in the data basis.

13. The apparatus according to claim 12, wherein the apparatus comprises a catalysis process apparatus (180) designed to conduct a catalysis process in a respective tubular reactor and correlate results of the catalysis process with the recorded amounts of filling material and the recorded fill level heights in the data basis.

14. The apparatus according to either of claims 12 and 13, wherein the apparatus further comprises: a filling device (125) with a weighing device (126) for recording and filling the respective tubular reactor (21, 22, 23, 24) with a filling material; a mechanical compacting device (130) for compacting the filling material introduced in the respective tubular reactor; and a fill level measuring device (145) for recording a fill level height of the respective filling material or an entirety of the filling materials in the respective tubular reactor, wherein the compacting device and the fill level height measuring device are especially designed to fill tubular reactors having a length in the range from 10 to 250 cm, especially in the range from 15 to 150 cm, especially in the range of 20-100 cm, and an internal diameter in the range from 4 to 100 mm, especially in the range from 7 to 60 mm, especially in the range from 7 to 40 mm.

15. The apparatus according to any of claims 12 to 14, wherein the apparatus further comprises a pressure testing device (150) for testing the pressure resistance of the entirety of the compacted filling materials.

16. The apparatus according to any of claims 12 to 15, wherein the apparatus comprises a positioning device (127) designed to position insert elements in the respective tubular reactors, wherein the insert elements are selected from a group consisting of a catalyst rest, a porous shaped body, a glass wool plug, a glass wool disk and ceramic beads.

17. The apparatus according to any of claims 12 to 16, wherein the data basis (170) also includes historical test data with a correlation between the filling materials, the corresponding fill level heights and associated catalysis process results, wherein the data basis especially includes an algorithm for running a self-learning process from supplied data of filling materials, the corresponding fill level heights and associated catalysis process results, and especially includes artificial intelligence (171).

## Revendications

1. Procédé d'assistance et de documentation de remplissage de réacteurs tubulaires (21, 22, 23, 24), comprenant :
la détection d'une sélection d'utilisateur (S10) d'un plan de remplissage pour un agencement de réacteurs tubulaires ;
la détection d'une quantité de premier matériau de remplissage (S21) dont un réacteur tubulaire provenant de l'agencement de réacteurs tubulaires est rempli ;
la détection d'une hauteur de remplissage du premier matériau de remplissage (S23) dont un réacteur tubulaire provenant de l'agencement de réacteurs tubulaires est rempli ;
la détection d'une quantité d'un deuxième matériau de remplissage (S31) dont un réacteur tubulaire provenant de l'agencement de réacteurs tubulaires est rempli ;
la détection d'une hauteur de remplissage du deuxième matériau de remplissage (S33) dont un réacteur tubulaire provenant de l'agencement de réacteurs tubulaires est rempli ;
la détection d'une hauteur de remplissage d'une hauteur totale (S60) de tous les matériaux de remplissage dans le réacteur tubulaire respectif ;
affectation (S70) des quantités détectées de matériau de remplissage et des hauteurs de remplissage détectées dans une base de données ;
mise en œuvre d'un processus de catalyse (S80) au niveau du réacteur tubulaire respectif et mise en corrélation d'un résultat du processus de catalyse avec les quantités détectées de matériau de remplissage et les hauteurs de remplissage détectées dans la base de données.

2. Procédé selon la revendication 1, dans lequel après la détection d'une hauteur de remplissage du deuxième matériau de remplissage (S33) et avant la détection d'une hauteur de remplissage d'une hauteur totale (S60) un nombre prédéfinissable de fois, il se produit une détection d'une quantité d'un matériau de remplissage supplémentaire (S41, S51) dont un réacteur tubulaire provenant de l'agencement de réacteurs tubulaires est rempli et une détection d'une hauteur de remplissage (S43, S53) d'un matériau de remplissage supplémentaire dont un réacteur tubulaire provenant de l'agencement de réacteurs tubulaires est rempli.

3. Procédé selon l'une quelconque des revendications précédentes, dans lequel une commande d'une étanchéification (S22, S32, S42, S52) du matériau de remplissage respectif se produit entre la détection d'une quantité du matériau de remplissage respectif (21, 31, 41, 51) et la détection d'une hauteur de remplissage (23, 33, 43, 53) du matériau de remplissage respectif.

4. Procédé selon l'une quelconque des revendications précédentes, dans lequel la détection d'une quantité du matériau de remplissage (S21, S31, S41, S51) respectif comprend une détection d'une indication d'utilisateur (S21a, S31a, S41a, S51a) de la quantité du matériau de remplissage respectif ou une détection d'une valeur de mesure (S21b, S31b, S41b, S51b) d'un dispositif de dosage servant au dosage d'une quantité du matériau de remplissage respectif.

5. Procédé selon l'une quelconque des revendications précédentes, dans lequel la détection d'une hauteur de remplissage (S23, S33, S43, S53) comprend une détection d'une indication d'utilisateur (S23a, S33a, S43a, S53a) de la hauteur de remplissage ou une détection d'une valeur de mesure (S23b, S33b, S43b, S53b) d'un dispositif de mesure de hauteur de remplissage servant à mesurer une hauteur de remplissage.

6. Procédé selon l'une quelconque des revendications précédentes, dans lequel la détection d'une sélection d'utilisateur (S10) d'un plan de remplissage pour un agencement de réacteurs tubulaires comprend une détection d'un plan de remplissage (S10a) élaboré par un utilisateur pour un agencement de réacteurs tubulaires.

7. Procédé selon l'une quelconque des revendications précédentes, dans lequel après une détection d'une hauteur de remplissage, un retour est transmis à l'utilisateur (S23c, S33c, S43c, S53c) informant si la hauteur de remplissage détectée correspond à une hauteur de remplissage attendue, sur la base de la quantité de matériaux de remplissage, d'un coefficient de compression du et/ou des matériaux de remplissage respectifs et d'une pression de compression.

8. Procédé selon l'une quelconque des revendications précédentes, dans lequel le procédé comprend une assistance et une documentation d'un remplissage d'au moins un premier réacteur tubulaire (21) et d'un deuxième réacteur tubulaire (22), dans lequel avant la détection d'une quantité d'un deuxième matériau de remplissage (S31i) dont le premier réacteur tubulaire (21) provenant de l'agencement de réacteurs tubulaires est rempli, il se produit une détection d'une quantité d'un premier matériau de remplissage (S21i) dont le premier réacteur tubulaire (21) provenant de l'agencement de réacteurs tubulaires est rempli, une détection d'une hauteur de remplissage du premier matériau de remplissage (S23i) dont le premier réacteur tubulaire (21) provenant de l'agencement de réacteurs tubulaires est rempli, une détection d'une quantité d'un premier matériau de remplissage (S21ii) dont le deuxième réacteur tubulaire (22) provenant de l'agencement de réacteurs tubulaires est rempli ainsi qu'une détection d'une hauteur de remplissage du premier matériau de remplissage (S23ii) dont le deuxième réacteur tubulaire (22) provenant de l'agencement de réacteurs tubulaires est rempli.

9. Procédé selon l'une quelconque des revendications précédentes, dans lequel le procédé comprend en outre un positionnement (S27, S37) d'un élément intérieur dans le réacteur tubulaire respectif, dans lequel l'élément intérieur est sélectionné dans un groupe composé d'une chaise de catalyseur, d'un corps moulé poreux, d'un bouchon de laine de verre, d'un disque de laine de verre, de sphères en céramique et d'un châssis, dans lequel les matériaux de remplissage sont notamment remplis dans la zone des réacteurs tubulaires située au centre des réacteurs tubulaires, dans lequel la longueur d'un segment de réacteur tubulaire à remplir de matériau de remplissage se situe notamment dans la plage de 5 à 500 mm, notamment dans la plage de 15 à 350 mm.

10. Procédé selon l'une quelconque des revendications précédentes, dans lequel le procédé comprend une représentation visualisée (S90) d'un marquage dans laquelle est illustrée une position cible inférieure et supérieure d'une fenêtre cible, ladite fenêtre étant disposée perpendiculairement à l'axe longitudinal du réacteur tubulaire respectif dans lequel sont affichées la hauteur de remplissage détectée et une hauteur de remplissage souhaitée.

11. Procédé selon l'une quelconque des revendications précédentes, dans lequel après une détection d'une hauteur de remplissage, cette valeur est comparée à une tolérance prédéfinissable à partir du plan de remplissage et qu'en cas de passage en dessous de la tolérance, le matériau précédemment rempli est redosé ou qu'en cas de dépassement de la tolérance, le matériau précédemment rempli est retiré pour repasser dans un champ de tolérance prédéfinissable.

12. Dispositif d'assistance et de documentation d'un remplissage de réacteurs tubulaires qui est conçu pour mettre en œuvre un procédé d'assistance et de documentation d'un remplissage de réacteurs tubulaires selon l'une quelconque des revendications 1 à 10, comportant :
un dispositif de détection de sélection d'utilisateur (110) servant à détecter une sélection d'utilisateur d'un plan de remplissage pour un agencement de réacteurs tubulaires ;
dispositif de détection de quantité de matériau de remplissage (120) servant à détecter une quantité d'un matériau de remplissage dont un réacteur tubulaire provenant de l'agencement de réacteurs tubulaires est rempli ;
dispositif de détection de hauteur de remplissage (140) servant à détecter une hauteur de remplissage d'un matériau de remplissage individuel et une hauteur totale de tous les matériaux de remplissage dont un réacteur tubulaire provenant de l'agencement de réacteurs tubulaires est rempli ;
dispositif de traitement de données (160) servant à l'affectation des quantités détectées de matériau de remplissage et des hauteurs de remplissage détectées dans une base de données (170), dans lequel le dispositif de traitement de données est réalisé pour mettre en corrélation dans la base de données un résultat d'un processus de catalyse avec les quantités détectées de matériau de remplissage et les hauteurs de remplissage détectées.

13. Dispositif selon la revendication 12, dans lequel le dispositif comporte un dispositif de traitement de catalyse (180) qui est réalisé pour mettre en œuvre un processus de catalyse au niveau d'un réacteur tubulaire respectif et pour mettre en corrélation dans la base de données les résultats du processus de catalyse avec les quantités détectées de matériau de remplissage et les hauteurs de remplissage détectées.

14. Dispositif selon l'une quelconque des revendications 12 et 13, dans lequel le dispositif comporte en outre : un dispositif de remplissage (125) avec un dispositif de pesée (126) servant à détecter et remplir le réacteur tubulaire (21, 22, 23, 24) respectif avec un matériau de remplissage ; un dispositif de compression mécanique (130) servant à la compression du matériau de remplissage rempli dans le réacteur tubulaire respectif ; et un dispositif de mesure d'état de remplissage (145) servant à détecter une hauteur de remplissage du matériau de remplissage respectif et/ou une totalité de matériaux de remplissage dans le réacteur tubulaire respectif, dans lequel le dispositif de compression et le dispositif de mesure de hauteur de remplissage sont notamment conçus pour remplir les réacteurs tubulaires présentant une longueur située dans la plage de 10 à 250 cm, notamment dans la plage de 15 à 150 cm, notamment dans la plage de 20 - 100 cm et présentant un diamètre intérieur se situant dans la plage de 4 à 100 mm, notamment dans la plage de 7 à 60 mm, notamment dans la plage de 7 à 40 mm.

15. Dispositif selon l'une quelconque des revendications 12 à 14, dans lequel le dispositif comporte en outre un dispositif de test de pression (150) permettant de vérifier la résistance à la pression de la totalité des matériaux de remplissage comprimés.

16. Dispositif selon l'une quelconque des revendications 12 à 15, dans lequel le dispositif comporte un dispositif de positionnement (127) qui est conçu pour positionner des éléments intérieurs dans les réacteurs tubulaires respectifs, dans lequel les éléments intérieurs sont sélectionnés dans le groupe composé d'une chaise de catalyseur, d'un corps moulé poreux, d'un bouchon de laine de verre, d'un disque de laine de verre et de sphères en céramique.

17. Dispositif selon l'une quelconque des revendications 12 à 16, dans lequel la base de données (170) comporte en outre des données d'essai historiques avec une corrélation entre les matériaux de remplissage, les hauteurs de remplissage correspondantes et les résultats associés de processus de catalyse, dans lequel la base de données comporte notamment un algorithme qui met en œuvre un processus d'autoapprentissage et comporte notamment une intelligence artificielle (171) composée de données importées de matériaux de remplissage, de hauteurs de remplissage correspondantes et de résultats du processus de catalyse associés.
